# EUROPEAN PATENT SPECIFICATION

(11) **EP 2 957 627 B1**
(45) Date of publication and mention of the grant of the patent: **22.02.2017**
(21) Application number: 15173089.2
(22) Date of filing: 22.06.2015
(51) Int. Cl.: C12G 1/02

(54) **MULTI-FUNCTIONAL OENOLOGICAL MACHINE AND USE IN THE OENOLOGICAL PRODUCTION CHAIN**
MULTIFUNKTIONALE ÖNOLOGISCHE MACHINE UND VERWENDUNG IN DER ÖNOLOGISCHE KETTE
MACHINE OENOLOGIQUE MULTIFONCTIONNELLE ET UTILISATION DANS LA CHAÎNE DE PRODUCTION OENOLOGIQUE

(30) Priority: 20.06.2014 IT FI20140153
(43) Date of publication of application: 23.12.2015
(73) Proprietor: Enoitalia Costruzioni Macchine Enologiche S.r.l., 50050 Cerreto Guidi (IT); Gori, Claudio, 50053 Empoli (IT); Fia, Giovanna, 50125 Firenze (IT)
(72) Inventor: GORI, Claudio, 50053 Empoli (IT); FIA, Giovanna, 50125 Firenze (IT); MENICHETTI, Daniele, 50050 Cerreto Guidi (IT)
(74) Representative: Valenza, Silvia

(56) References cited:
- EP-A1- 0 246 202
- WO-A2-2006/079987
- US-A- 4 317 410

## Description

### FIELD OF INVENTION

The present invention relates to the field of machines for oenology and oenological processes that can be performed therethrough.

### BACKGROUND OF THE INVENTION

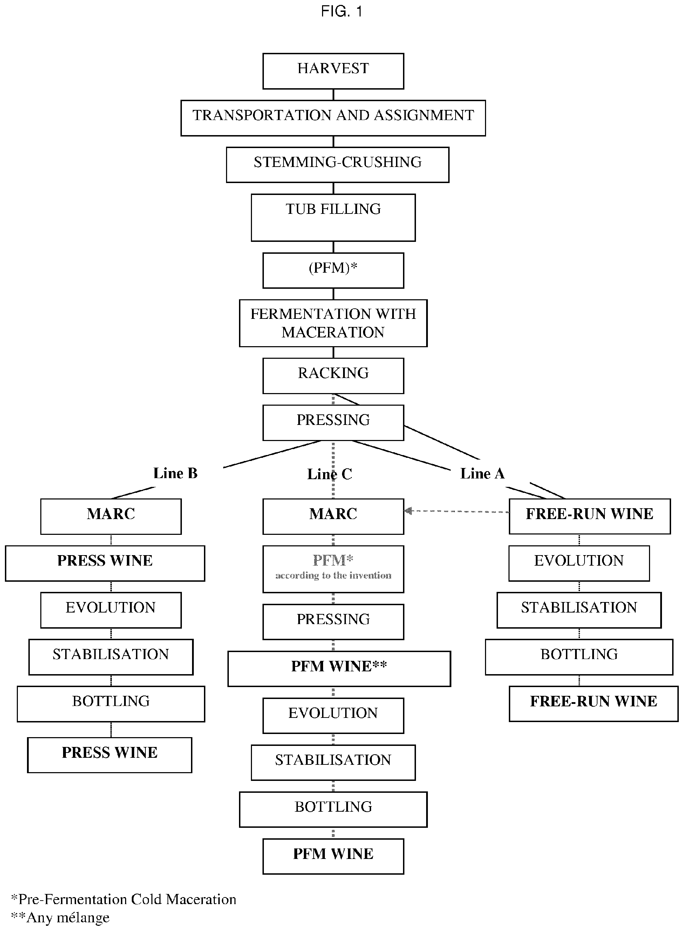

Modern oenology continuously seeks technological solutions and new production techniques that allow the characteristics of the wines to be improved in relation to their suitability and, above all, their typicity, while contributing to product and market diversification. Technological innovation must now, more than ever, compete against production costs that must remain acceptable for businesses. Vinification operations ranging from the harvesting of grapes (Fig.1, lines **A** and **B**).

As regards the vinification techniques, besides classic maceration with alcoholic fermentation, pre-fermentation cold maceration techniques for both red and white wines, and post-fermentation warm maceration techniques in the case of red grapes, have been developed. These techniques are based on the argument that the different chemical compounds (polyphenols, aromas, nitrogenous compounds etc.) contained in the solid parts of the grapes are selectively yielded as a function of the different maceration conditions and that modulation of the extraction may contribute to improving product quality and diversification. Of the parameters that affect extraction of the components of the solid parts of grapes, temperature plays a fundamental role and the mixing methods of the mass, consisting of grape must/wine and solid parts, are another important determining factor of the extraction yield. In traditional vinification with the skins, the racking operation, i.e. separation of drain wine from the marc, which is sent to the pressing step to obtain more runs of wine (press or second press wine), is performed on termination of maceration. The quality of press wine is generally inferior to that of drain wine and decreases the greater the force applied for the extraction; on termination of pressing, the spent marc is normally disposed of as a process by-product. The traditional term, "spent marc" indicates that the pressed marc is no longer able to yield chemical compounds that are useful for the quality of the wine. This statement is not, however, completely correct since it has been demonstrated that, following classic maceration and pressing operations, the marc is still able to release aromatic and polyphenols compounds into the wine, as occurs in the case of the production of particular types of wine as Valpolicella ripasso obtained by placing Amarone or Recioto over pressed marc. For the production of red wines with long maturation by class techniques, maceration of the solid parts extended beyond the end of alcoholic fermentation can give rise to an increase in the concentration of phenols that makes the wine initially more aggressive and astringent. The damping of these sensory characteristics only takes place following long periods of maturation, preferably in wood. For these types of wine, a high concentration of phenols is also needed in order to stabilise the product from the point of view of colour. Current vinification systems propose techniques for improving the extraction of grape polyphenols that are based on different types of mass stirring (must/wine and solid parts) or take advantage of an early extraction, as in the case of the flash détente technique, or, also, of the rise in temperature at the end of fermentation.

In the past 50 years we have assisted in the development and marketing of a number systems for the maceration of white and red grapes, equipped with devices for the automation of operations at various levels. These systems, which exploit different mechanical and physical principles, have, on the one hand, allowed cellar operations to be made more efficient and, on the other hand, the quality of the wines to be improved. Although much analytical insight has been acquired, performance of the maceration step of the solid parts of the grapes in vinification with the skins and, in some aspects, also in vinification without the skins, remains one of the critical points of the production process. The quality of the product largely depends on the characteristics of the grapes at the time of harvesting (variety and ripeness) and on the extraction of the solid part components of the grapes during maceration. To meet the needs of an increasingly accurate control of the parameters (time, temperature, oxygenation) and of a more efficient management of the actions (mass agitation operations) automated systems for the maceration of the solid parts of the grapes have been developed, such as pump over or punch down systems, submerged-cap systems, rotary fermentation tanks, cascade systems and systems that exploit the carbon dioxide produced during alcoholic fermentation, combined with software that allow the programming of such operations as a function of the quality of the raw material and of the production objectives. From an operational point of view, a very important characteristic that these systems lack is the possibility of being used at various levels of the production process. Indeed, systems designed for performing the maceration could benefit from added value if they were made in such a way as to be also exploitable for other cellar operations such as stabilisation and storage. Vinification lees means the sediment that forms at the bottom of the tank on termination of the alcoholic fermentation (gross lees). Fine lees, on the other hand, consist of the solids that remain in suspension 24 hours after the wine has been agitated. In traditional vinification, the periodic transfer operation allows to remove from the wine the lees sediment that is normally disposed of by giving to a distillery. These operations involve more or less extensive wine losses as a function of the size of the company. There are currently several lees recovery systems, such as lees filters that are useful for companies that must handle large volumes of this matrix. Vinification lees primarily consist of residues of the solid parts of the grapes and of the yeasts and bacteria that were involved in the vinification. This matrix has scientifically proven oenological properties, such that the fine lees is traditionally used in a small percentage in the maturation step of specific types of wine, both red and white, which are kept in contact with the lees for long periods of time during which regular and frequent agitation operations are performed. Sur lie maturation traditionally takes place in small wooden containers that allow a natural micro-oxygenation of the product which is useful for combating the onset of reduction smells and are relatively easy to agitate. The key compounds and the interactions responsible for improving the sensory characteristics of sur lie matured wines have not yet been entirely clarified but many oenologists and researchers attribute this role to the release of mannoproteins and aromas, to the antioxidant power and to the ability to adsorb unpleasant volatile compounds on the part of the lees. The risks associated with using the vinification lees primarily relate to the development of microorganisms that can produce metabolites or precursors of volatile compounds with the consequent appearance of veritable olfactory defects that compromised the quality of the wine. The use of vinification lees for maturation is therefore a delicate operation that must be properly managed with the use of appropriate stabilisers and the implementation of periodic product checks. Some current systems, such as the Elicontrol and Gimar system, are dedicated to the maturation of wine on fine lees and are alternative technological solutions to traditional protocols.

The post-fermentation cold maceration (PFM) technique is a recent technique and is useful for the processing of matrices (fermented marc and lees).

The first vinification tests with post-fermentation cold maceration (PFM) technique were conducted in 2007, on Cabernet Sauvignon grapes, adding 150 kg of solid-state carbon dioxide (dry ice) as cryogen, to about 5 q of marc; several litres of drain wine were added after layering the marc with the dry ice in a fiberglass tub. The treatment lasted 5 days, performing 2 traditional punch downs per day. The results of these preliminary tests are reported in a degree thesis entitled: Post-fermentation cold maceration (AA 2008-2009), Examiner: Ms Monica Picchi, Co-Examiner: Claudio Gori, Oenologist, Candidate: Francesco Catolfi, examined at the University of Florence, Faculty of Agriculture, Department of Agricultural Biotechnology **(1)** and are also highlighted on the extraVelvet 1.0 machine dedicated website (www.extravelvet.com). The main problems encountered in the course of the study related to the stirring operations, which, performed through classic punch downs or pump overs, were not very efficient at homogenising the cryogen with the marc thus determining significant differences in temperature between the different parts of the treated mass with consequent decrease in the efficiency of the operation. In view of the considerable volumes of marc to be treated at industrial level, conducting PFM with classical techniques proved to be completely inadequate. Moreover, draining of the marc with separation of the grape seeds, a necessary operation in vintages unfavourable for their proper maturation, was impossible. Despite this, the excellent results obtained, both from a chemical and sensory point of view, have encouraged the inventors to further explore the topic of PFM and to find suitable technological solutions for the performance thereof in an industrial situation. **First industrial prototype.** The first prototype of a machine for the performance of PFM was developed by Enoitalia srl in 2012, based on the design of oenologist Claudio Gori and Stefano Menichetti. The prototype consisted of a vertical, dual-chamber cylindrical tank made of AISI 304 steel, with a 1250 litre capacity, equipped with an internal agitator having a helical structure with fixed blades (non-removable), a single-acting scraper, a filtering grid having circular holes, an electrical panel for switching on and off of the various components. The prototype was used in 2012-2013, even for vinification lees processing tests **(2).** The main problems encountered in the use of the prototype related to the helical structure of the internal agitator formed by a feed screw that was unable to homogeneously stir the product and created a compaction of the mass toward the outer walls of the machine. The same system did not allow a proper extraction of the marc. The temperature control and maintenance of the product was not very efficient.

**extraVelvet 1.0.** In 2013 the inventors designed and produced a new machine at Enoitalia srl, called extraVelvet 1.0 (registered trademark), which characteristics are described in the dedicated website (www.extravelvet.com). Extravelvet 1.0 was presented at SIMEI, International Oenological and Bottling Equipment Exhibition, 25th Edition, Milan Trade Fair, Rho, Italy, 12-16 November 2013. Extravelvet 1.0 is equipped with a series of automatic mechanisms that in part resolved the problems highlighted during processing with the prototype. It is also equipped with an internal agitator having removable blades, a filtering grid divided into two parts, flexible piping for pumping over and washing circuit processes. The control PLC is equipped with a customised user interface capable of managing the pumping over circuit, the rotation of the internal agitator, the temperature, any micro-oxygenation system The main problems that emerged in the course of the processings performed with the extravelvet 1.0 in the course of the 2013 grape harvest 2013, are as follows: the single-acting scraper created difficulties in discharging the solid marc and tended to overcompact the marc with consequent blocking of the entire motorization; the sizing of the inverter was underestimated with respect to the system's ability to compact the marc; the grape seeds were not completely separated from the agitated mass (filtration grid with 2x20mm holes); difficulties in the washing and removal operations of the internal drainage channels; difficulties in removing the two-part filtration mesh; errors in loading the marc with non-secure contact level probes and late overfill signals; stagnation of products in the flexible piping, the sight glass, and the pump body; difficulty in quickly check the characteristics of the treated product; lack of a connection for remote 24 hour processing checks; integration difficulty with refrigeration plants in the cellar; machine transport and installation problems due to the overly large dimensions thereof.

The aim of the present invention is to provide an improved machine and method that is also improved, which, through the use of the machine, in particular allows a better valorisation of matrices (fermented marc and lees) that are normally disposed of as a process by-product. The aim of the present invention is also to provide an oenological machine that is versatile and may therefore be used for multiple processes of the oenological die.

EP 0 246 202 A1 discloses an oenological multi-purpose machine.

### SUMMARY OF THE INVENTION

The machine (1) for the preparation of a wine product according to the present invention has solved all the foregoing problems by providing important novel characteristics.

With reference to the drawings, the object of the present invention is a machine (1) for the preparation of a wine product, comprising a container (2) for containing an at least partly fluid oenological matrix, said container (2) having a prevalent development direction (A); mixing means (3) placed inside the container (2) and configured to mix said oenological matrix, said mixing means (3) comprising at least a first (5) and a second agitator (6) configured to move said oenological matrix along said prevalent development direction (A); filtering means (8) placed inside the container (2) and configured to filter said oenological matrix; means for adjusting the temperature (15) inside said container comprising a plurality of panels (16) arranged peripherally on said container (2) and configured to allow the circulation therein of a heat exchange fluid; characterized in that said panels (16) overall cover at least 75% of the surface of said container (2).

The machine according to the invention is a multi-functional tank-macerator i.e. suitable for conducting a number of vinification process operations, which can be inserted into the oenological production line for the valorisation of the matrices (fermented marc and lees) that are normally disposed of as a process by-product, resulting in sometimes extensive wine losses.

The machine (1), object of the present invention, is distinguished by the high degree of mulfunctionality, i.e. for the possibility of being used for a wide range of cellar operations. In addition, the machine (1) is characterised by extreme simplicity of use, the PLC allows automatic control of operations and the traceability thereof. The on-board database and analyses systems that are also remotely accessible allow work in progress to be immediately modulated.

In a preferred aspect, the present invention also relates to a vinification process through post-fermentation cold maceration (PFM) of marc, said process comprising:
loading a strained marc extracted from the fermentation tank into the machine (1);
adding drain wine to the marc in a marc:drain wine ratio of about 3:1, to obtain a mass in which the marc is in a floating state;
adding a cryogenic means to the mass under stirring 1-40 rpm as a function of the quality of the marc, said cryogenic means selected from dry ice, liquid CO2 and liquid nitrogen, in an amount ranging between 5 and 10 kg/hL to produce within the mass an abrupt decrease in temperature sufficient to break down the cells of the skins with consequent release of different metabolites;
depending on the variety of grape from which the marc is derived, on the state of ripeness of the grapes at the time of harvest and on the maceration technique used, the temperature will be kept between +2 °C and +8 °C, the total duration of the treatment may range from 24 to 72 hours, with stirring of 10-20 minutes every 4-8 hours, the liquid pumping over operations will be carried out with a frequency of 2-4 times for a duration of 10-15 minutes, the rotation of the propellers in a single direction or in both directions alternately;
on completion of the treatment, the PFM wine is obtained by draining, thanks to the filtering grid which retains the solids; the treated marc is then extracted from the machine thanks to the double scraper, and pressed, or sent directly to the distillery.

The post-fermentation cold maceration (PFM) technique achieved with the machine, object of the present invention, proposes a new rapid and controlled, selective extraction system of marc components. With respect to current techniques, the PFM as described above that can be performed with the machine object of the invention is applicable to a number of grape varieties of types of wine, thus contributing to improving the sensory characteristics of the product accompanied by maintenance of suitable physical-chemical characteristics.

In a preferred aspect, the present invention also relates to a valorisation process of vinification lees, said process comprising:
collecting vinification lees in a tank and adding sulphur dioxide in an amount equal to about 60-70mg/mL of lees;
homogenizing the lees through a stirring operation by pumping over of 20-30 minutes;
loading of the lees into the machine according to the invention;
processing at 17-22 °C for a time between 3 and 7 days, and mixing every 6-10 hours for 5-15 minutes, with clockwise or counter clockwise direction of rotation of the mixing members, providing an amount of oxygen supplied through a micro-oxygenator of between 2 and 4 mg/L/month and optionally adding commercial enzymes and/or inactivated yeasts;
decanting for a time of between 1 week and 3 months and optionally adding oxygen in micro-doses of 2-4 mg/L/month;
separating the wine through the decanter valve (27).

The processing of the total, high density lees, is another novel element introduced into the process. With the VL technique proposed by the inventors, it is in fact possible to process a company's total vinification lees, i.e. all the material that derives from the transfer operation normally performed in the cellar on termination of the alcoholic and malolactic fermentations. This matrix can consist of both the sediments produced in the course of mono-varietal vinifications and from the sediments produced in the course of multi-varietal vinifications of different varieties of red and white grapes, characterized by variable and modulable density as a function of the quality of the lees, up to very high values of about 1.4 -1.5 g/l. The performance of the lees processing proposed by the inventors, not only allows recovery of most of the wine contained therein but also the valorisation thereof through the acquisition of extremely positive chemical and sensory characteristics, above all in relation to texture and aroma. Moreover, the management of the lees proposed by the inventors allows harmful chemical and microbiological activities that can lead to the product non-conformity to be checked. The use of commercial enzymes and/or inactivated yeasts having β-glucanasic activity, can contribute to both improving the sensory characteristics in terms of texture, astringency and stability of the aroma through the release of mannoproteins from yeast and to the microbiological stability of the product. Some of the results of the preliminary tests on the processing of lees in 30-60 days, conducted between December 2012 and January 2013, are reported in a degree thesis entitled: Management of the vinification lees of Sangiovese grapes (AA 2012-2013), Examiner: Ms Giovanna Fia, Co-Examiner: Claudio Gori, Oenologist, Candidate: Amit Toledo, examined at the University of Florence, School of Agriculture, Department of Agricultural Systems, Food and Forestry Management (2) and in a work presented at the WAC 2014 International Conference, held in Beaune, France (3).

A substantial reduction in the duration of the treatment, which is useful for achieving the set oenological objectives has been obtained with the new machine object of the present invention. We have indeed passed from 30-60 day cycles to of 3-7 day cycles, making the use of this machine very efficient in relation to the possibility of carrying out a number processings in the context of the same vintage. This objective has been achieved by optimising handling of the mass through best sizing of the internal propellers, which were made more efficient in convective motion, by the possibility of rotating these members both from right to left and vice versa to perform a better resuspension of the solids in solution, by the ability to change the speed through the electronic inverter, by the addition of a cooling band as well as full tank insulation, in addition to the insertion of an agitator at the bottom of the tank.

Unlike many other prior art systems, the construction characteristics of the oenological machine object of the patent, were designed to make it extremely versatile and usable for conducting a number vinification process operations. In addition to conducting post-fermentation cold maceration (PFM) and valorising vinification lees (VL), both object of the present invention, it can also be exploited for the following operations:
commercial yeast rehydration;
pied de cuve preparation;
   - performance of pre-fermentation warm and cold maceration;
   - use as press for fermented and non-fermented marc;
micro-oxygenation;
tartaric stabilisation;
controlled-temperature product preservation;
pH correction through cation exchange resins;
chip management;
   - management of the flora of unwanted yeasts.

Such a degree of multifunctionality is not evident in any case in current systems, and guaranteed, on the one hand, by the structure of the internal parts (filtration grid, handling system, scraper) that have different functions and are completely removable so as to optimise cleaning operations between different operations, on the other hand, by the control systems of different processing parameters. The multifunctional management of system through a dedicated software is thus another characterising element that determines the machine's multifunctionality. Other novel elements are given by the possibility of remotely managing operations and by the possibility of controlling certain parameters of the product in the course of processing by means of an auto-analyser system.

### BRIEF DESCRIPTION OF THE DRAWINGS

**Figure 1** shows a schematic view of vinification with the skins line. Vinification operations ranging from harvesting of the grapes to racking can be managed in a traditional or innovative way, according to the business protocols that are deemed most appropriate. After the racking, lines **A** and **B (****Fig. 1****)** represent traditional processing, line **C** represents the innovative post-fermentation cold maceration (PFM) technique.

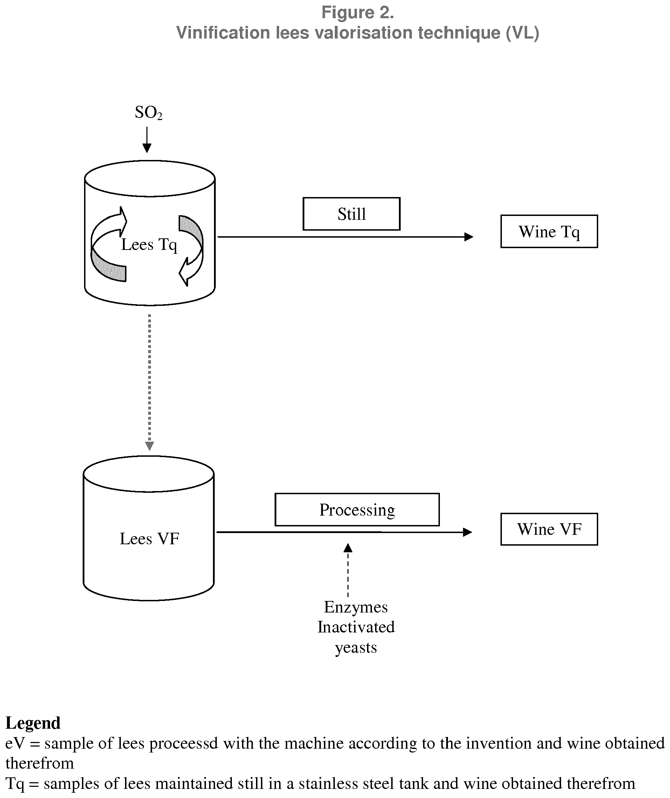

**Figure 2** shows a schematic view of the valorisation of the vinification lees technique (VL).
**Figure 3** shows the sensory profile of the Cabernet Franc wines obtained with the PFM technique in the machine according to the invention (eV) or in the traditional manner (T).
**Figure 4** shows the sensory profile of the Montepulciano wines obtained with the PFM technique in the machine according to the invention (eV) or in the traditional manner (T).
**Figure 5** shows the principal component analysis (PCA) of the chemical parameters of samples A, B and C of the valorisation process of the vinification lees according to the invention.
**Figure 6** shows the principal component analysis (PCA) of the chemical parameters of samples A of the valorisation process of the vinification lees according to the prior art.
**Figure 7** shows the principal component analysis (PCA) of the chemical parameters of samples B of the valorisation process of the vinification lees according to the prior art.
**Figure 8** shows the principal component analysis (PCA) of the chemical parameters of samples C of the valorisation process of the vinification lees according to the invention.

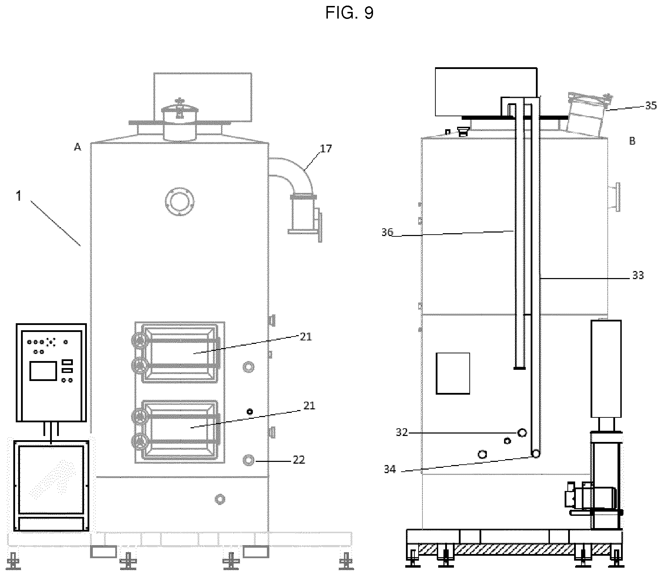

**Figure 9** shows the front and side views of the exterior of the machine 1
**Figure 10** shows a cross-sectional front view of a machine for the preparation of a wine product according to the present invention.
**Figure 11** shows a cross-sectional top view of the machine of Figure 10;
**Figure 12** show a top view of a detail of the machine of Figure 10 and 11;
**Figure 13** shows a cross-sectional side view of a detail of the machined of Figure 10 and 11.
**Figure 14** shows an example of a decanter tube 27.

### DETAILED DESCRIPTION OF THE INVENTION

With reference to the accompanying drawings, 1 indicates a machine for the preparation of a wine product according to the present invention.

The machine 1 comprises a container 2, arranged to contain an oenological matrix. In the context of the present invention, "oenological matrix" means fresh grapes, must and marc, fermented marc, semi-solid lees, wine, and also yeasts in rehydration (pied de cuve). This oenological matrix typically has solid suspensions, i.e. it is at least in part fluid, to allow an adequate agitation of the solids in suspension.

In particular, the container 2 has a prevalent development direction "A". Preferably, the prevalent development direction "A" of the container 2 is vertical. In greater detail, the container 2 has an axial-symmetrical form with respect to the prevalent development direction "A", preferably cylindrical.

The machine 1 also comprises the mixing means 3. These mixing means 3 are placed inside the container 2. These mixing means 3 are in particular configured to mix the oenological matrix during a post-fermentation process that will be better illustrated in a subsequent part of the present description.

The mixing means 3 comprises a shaft 4 placed, at least in part, inside the container 2. In particular, this shaft 4 is arranged along the prevalent development direction "A" of the container 2. The machine 1 further comprises movement means of the shaft 4, capable of putting it into rotation to allow operation of the machine 1.

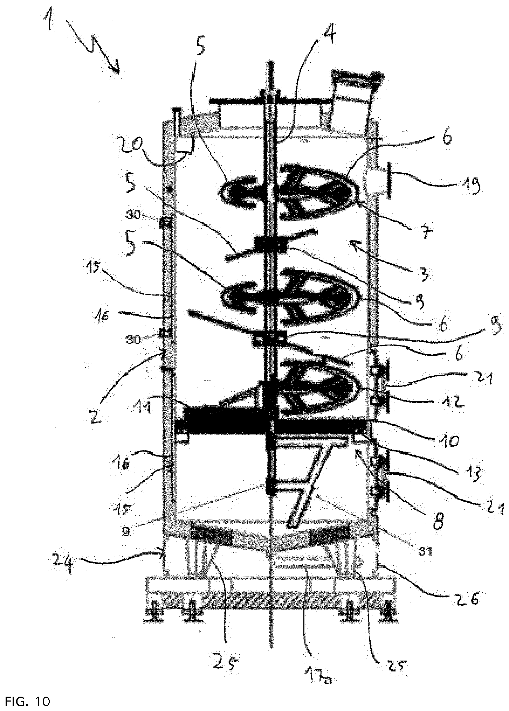

In greater detail, the mixing means 3 comprise at least a first 5 and a second agitator 6, configured to move the oenological matrix along the prevalent development direction "A". More in particular, the first agitator 5 moves the oenological matrix downward. Similarly, the second agitator 6 moves the oenological matrix upward. With reference to Figure 10, the first agitator 5 and the second agitator 6 are opposite each other with respect to the shaft 4. Preferably, the first agitator 5 and the second agitator 6 are splined to the shaft 4, and are locked by a fixing device 9 comprising two opposing plates that define a seat for the shaft 4. These plates are fixed to each other with bolts, so as to be demountable for cleaning of the interior of the container 2.

In further detail, the machine 1 comprises a plurality of first agitators 5. The machine 1 further comprises a plurality of second agitators 6. In other words, the machine 1 comprises a plurality of mixing elements 7, each defined by a respective first 5 and second agitator 6. With reference to Figure 10, the machine 1 comprises four mixing elements 7. It should be noted that the first 5 and the second agitator 6 of a respective mixing element 7 are arranged so as to be coplanar.

The mixing elements 7 are also arranged coaxially on the shaft 4, each on a respective support plane. The support planes of the mixing elements 7 are in particular parallel to each other and perpendicular to said prevalent development direction "A" of the container 2. Each mixing element 7 has a radial staggering, preferably of 90°, with respect to another mixing element 7 adjacent thereto.

In the preferred embodiment of the invention, the second agitator 6 has a work surface that is greater than that of the first agitator 5. In other words, the second agitator 6 is larger than the first agitator 5.

The machine 1 comprises filtering means 8 placed inside the container 2. These filtering means 8 are configured to filter the oenological matrix, and comprise a grid 10 placed in a lower area of the container 2. The grid 10 is preferably positioned at about ¼ of the capacity of the container 2.

In particular, the grid 10 is arranged in a seat 13 inside the container 2. The grid 10 comprises at least three portions 10a separate from each other and reversibly removable from the seat 13. Preferably, the grid 10 comprises four portions 10a.

The filtering means 8 also comprise a scraper 11 placed in contact with the grid 10 and configured to rotate with respect to the prevalent development direction "A" of the container 2. In particular, the scraper 11 is also splined to the shaft 4. The scraper 11 is configured to remove a solid residue from the grid 10 in both directions of rotation. In other words, it is a double-acting scraper 11.

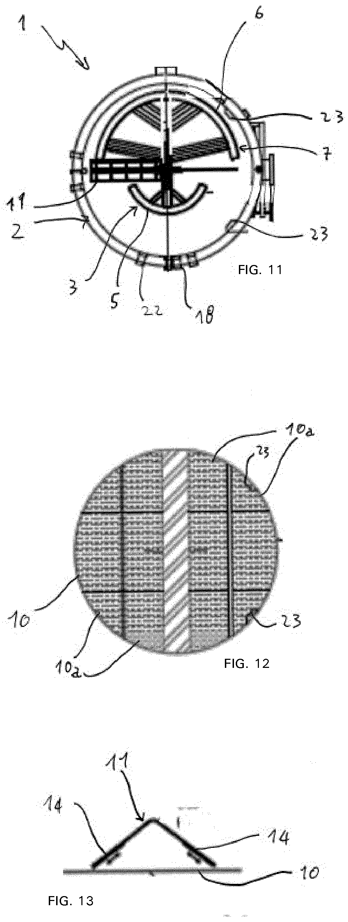

With reference to Figure 13, the scraper 13 defines a pair of blades 14 arranged symmetrically with respect to the prevalent development direction "A" of the container 2. Each blade 14 is active on the grid 10 in a respective direction of rotation of the scraper 11.

It should be noted that a further agitator 12 is splined to the shaft 4 at the scraper 11. The further agitator 12 is opposite to the scraper 11, and has analogous structure and function as the second agitator 6 described above.

In addition, a blade agitator (31) splined to the shaft 4, and locked by a fixing device 9 comprising two opposing plates defining a seat for the shaft 4, is provided below the filtering grid 10.

To implement the post-fermentation process, the machine 1 comprises temperature adjusting means 15 inside the container 2. These adjusting means 15 comprise a plurality of panels 16 arranged peripherally on the container 2 and configured to allow the circulation therein of a heat exchange fluid. In the preferred operating mode of the invention, the panels 16 are used for the circulation of a coolant, preferably glycol.

The machine 1 further comprises a valve 32 arranged for insertion into the container 2 of a porous diffuser, connected via flexible tubing to a micro-oxygenation system installed within the control panel, which functionality will be better illustrated in a subsequent part of the present description.

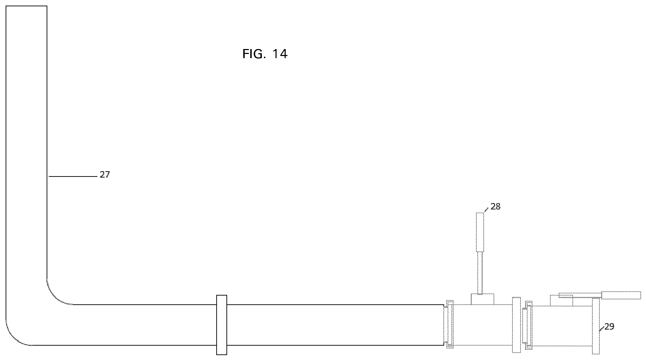

The machine 1 also comprises an opening 22 for a decanter 27 (Fig. 14). This decanter 27 (see Figure 14) comprises a tube able to change its inclination with respect to the prevalent development direction "A" and, consequently, allows the material to be drawn at different heights of the container 2. Said decanter tube is placed inside the container 2 below the grid 10 transversely with respect to the prevalent development direction "A", preferably in a horizontally arrangement. Said decanter tube preferably comprises a lever 28, positioned outside the container 2, to allow rotation of the tube and therefore establish the suction height. Said decanter tube preferably further comprises a valve 29 for withdrawing the liquid, said valve positioned at the outer end of the decanter tube.

As well as housing the decanter tube, the opening 22 is useful as partial unloading of the container 2.

The machine is also equipped with an opening 22a, positioned above the grid 10, said opening 22a being useful for partial unloading of the container 2.

The machine 1 further comprises at least one door 21 on the container 2. Preferably, the machine 1 comprises a pair of doors 21. A first door 21 is placed at a higher height with respect to the cited grid 10, while a second door 21 is placed at a lower height.

The machine 1 further comprises at least one drainage channel 23. Preferably, the machine comprises a plurality of drainage channels 23. These channels 23 are peripherally arranged on the container 2, preferably arranged in parallel to the axis of prevalent development of the container 2 and, even more preferably, angularly equally spaced with respect to the shaft 4. These drainage channels are fixed at a lower end of the container 2, preferably with screws. In addition, the drainage channels 23 are hooked onto the container 2 at an upper end. This advantageously allows the drainage channels 23 to be demounted without removing the agitators 5, 6, 12 and the scraper 11. Even more advantageously, one of the bolts of the shaker (31) is provided with a security key (not illustrated) that it is necessary to insert inside an end stop installed in the control panel to activate the wash functionality. This advantageously increases the safety of the machine 1, in that it is not possible to start the wash function with rotation of the shaft 4, without having demounted the agitator (31).

The machine 1 further comprises control means of the PLC type (not illustrated), associated to the adjusting means and/or to the mixing means 7 and/or to the filtering means 8. These control means comprise a receiver module of the wireless type and an analyser module of the enzymatic type. This advantageously allows an extremely easy and versatile use of the machine 1.

The machine 1 further comprises a loading/unloading conduit 17/17a placed in fluid communication with the container 2. In particular, the conduit 17, placed in the high part of the container 2, is useful for the loading of the oenological matrix into the container 2, while the conduit 17a, placed at the lowest point of the container 2, is useful for the full unloading of the container 2. In particular, the conduit 17/17a is connected to a pump (not illustrated). The control means comprise a dosage module of the products and an electromagnetic litre counter associated to the loading/unloading conduit 17/17a. The control means further comprises a first and a second level sensor (not illustrated). In particular, the first level sensor is placed at the upper part of the container 2.

Preferably, the machine further comprises a circuit for the pumping over of the oenological matrix inside the container 2; said pumping over circuit comprising rigid stainless steel tubing 33, said tubing 33 being connected to a pump (not illustrated) and drawing from an opening 34 positioned in the container 2 under the grid 10.

The machine 1 further comprises a sight glass19, preferably conical, associated to the container 2, so as to perform a visual inspection of the content thereof during operation of the machine 1. A lighting device (not illustrated) is placed inside the container 2, so as to facilitate inspection.

The machine 1 further comprises support means 24. These support means comprise a plurality of legs 25, preferably 3, placed under the container 2. A peripheral metal sheet 26 is placed externally with respect to the legs 25. This peripheral metal sheet 26 extends the outer perimeter of the container 2 and provides a further support base.

The machine 1 consists by a palletisable stainless steel structure on which is installed a cylinder 2 having a vertical or horizontal axis, made of stainless steel suitable for contact with food with variable 1000 litre to 10000 litre capacity depending on the model.

The cylinder 2 is fitted with a geared motor/variable speed motor positioned in both the upper part of the cylinder and at the centre with respect thereto, and in the lower part of the cylinder (special version having reduced dimensions). The geared motor transmits its rotation to the rotary "agitator" element installed inside the machine, by means of its hollow shaft. Said variable speed motor preferably has a power of at least 5.5 Kw.

A grid with the function of filtering the liquid part of the product from the more solid part, allowing the grape seeds, which thanks to the movement of the internal blades and the scraper are collected on the bottom of the tank, is installed at about ¼ the capacity of the cylinder 2. The separating grid is made of wear-resistant material, suitable for contact with food, and divided into sectors so that removal from the machine is easy to facilitate cleaning operations and the performance of operations in which they are not required. A second agitator 31, smaller than the previous one, is installed below the separating grid, splined to the upper axis of the agitator, with the aim to keep the liquid part located under the grid under agitation. This agitator is made so that it can be demounted and the axis removed in the case of applications for which it is not required.

During rotation, the blades that are integral to the central axis act on the product in different ways:
- bringing it into rotation (rotary movement about the axis);
- mixing high with low: by exploiting the geometry of the blades and their arrangement on the central axis, two "counter-rotating" propellers are formed: while one propeller pushes the product upward, the other pushes the product downward in different quantities; the movement of the product undergoing the action of the blades assumes those "delicate" turbulence characteristics that are needed for: a) quickly reaching the set temperature in a uniform way; b) allowing a complete contact between the liquid part and the solid component of the product; c) evenly distributing any additions into the matrix to be treated, dry ice for example;
- filtering and pressing the solid component.

The direction of rotation of the internal agitator is of the clockwise and counterclockwise type, and can be manually or automatically controlled by the dedicated software. The speed of rotation is variable: the system can be equipped with a speed control inverter (fully automated solution, controlled by software), or variable speed motor (manual operator control).

In addition to being performed at the desired speed, the rotation is variable depending on the work phases; in the automatic version it is possible to set alternated circuits in order to obtain a pressing effect of the treated product and make subsequent pressing cycle of the product itself superfluous.

Inside the machine, installed on the cylinder in the area above the filtering grid, are provided between a minimum of 2 and a maximum of 4 demountable drainage channels, with the function of increasing filtration of liquid during rotation of the agitator and acting as flow restrictor.

Above the filtering grid and below the grid at the bottom of the tank, are installed two rectangular doors with dimensions such as to allow the passage of a man, with an inspection and machine emptying function, as well as allowing extraction of various internal components.

The bottom of the tank is conically shaped for full unloading of the product. A stainless steel decanter 27 is installed below the filtering grid to allow performance of the pumping over operations, allowing the separated grape seeds to deposit on the bottom, and to perform unloading operations, in case of processing with the lees.

As well as the decanter valve, the automatic pumping over circuit consists of a stainless steel tubing 33 external to the cylinder, of a volumetric pump that is automatically controlled by the software, of two valves and of a centre tap for the outlet of the liquid inside the tank, installed so as to provide a jet over the entire surface of the cylinder. A bypass valve capable of allowing full emptying of the circuit itself is present on the pumping over system, thus preventing product stagnations.

The roof of the cylinder is provided with an inspection door 35 that is off-centred on the front part, with the purpose of inspecting the internal agitation and any manual loading of products to be added to the processing. Continuous product inspection is provided by the sight glass 19 installed frontally, on a conical connection. The internal lighting system 20 allows product quality to be quickly checked.

Loading of the product into the tank takes place through a side connection 17, achieved with 90° curve and shut-off valve. A dual safety system has been provided for checking the level of product inside the tank: a first level probe is installed on the roof of the tank at about 20 cm from the edge; a second level probe is installed below the drainage grid. This safety circuit ensures optimal filling of the tank even in the presence of an incorrect signal on the part of one of the two probes.

A wash circuit tubing is provided outside the tank with a stainless steel tubing 36, a ball connecting valve and an internal wash ball installed on the roof of the tank. Special stainless steel connections are moreover provided, both on the roof of the tank and along the cylinder, for installation of the hydrokinetic rotating-head wash system.

The tank is designed to control and maintain the temperature by means of cooling bands that cover 75% of the outer surface, and of an insulation with insulating material of at least 60 mm on the entire surface. The cooling circuit is controlled by the equipped software and the temperature probes installed at the back of the tank: the inlet and outlet of the coolant are controlled by means of a circuit controlled by 4 automatic, stainless steel solenoid valves.

The base on which the tank rests is preferably made of stainless steel tubular members and floor made of non-slip material. The base is made to allow movement of the machine by means of forklift trucks, cranes, and by means of swivel wheels. Special adjustable, stainless steel feet are provided for the installation.

The tank is equipped with a stainless steel control panel, installed on a swivel support to allow the 360 ° rotation thereof. All connections are produced with electrical connectors for quick maintenance and to allow transportation of the panel separated from the machinery. All system commands are produced for both automatic control by PLC and for manual control. The electronic inverter, micro-oxygenation unit, multi-parameter control module, and a continuity unit to ensure performance of the operations in the event of lack of electricity, are housed in the control panel in addition to the control PLC. Alongside the micro oxygenation unit, the machine is equipped with a complete kit for the micro oxygenation circuit, consisting of a retractable rod complete with microporous dispenser, pressure reducer and flexible tubing, to connect to a valve installed about 20 cm from bottom of the tank.

The software supplied is fully customised with a touch-screen user interface that shows the diagram of the machine: all variable components, such as pumping over circuit, internal agitator, washing plant, micro oxygenation, mms and metering products are displayed with an indication of status through a red/green light, and are maintainable is in automatic mode that semi-automatic. The operator may check the operating times of each component and change the operation thereof at any time. A maximum of 100 work programs are set in automatic mode: for each program a duration is established , a subdivision into phases of each program and the operating variables such as temperature, speed, direction of rotation, alternating rotation, pause/work times, micro oxygenation, measurement control operating variables are set for each phase. In addition, an internal database performs storage of the temperature variation occurring in the last 6 months of work.

Thanks to the addition of an electromagnetic litre counter, in the dosage functionality, the automatic system is able to manage the temperature, time, doses, and multi-parametric measurement control parameters as well as control of an external product dosage pump.

The machine functionality check can be performed in both local function (on the control panel directly, or using a special storage USB), and remotely via Ethernet or wireless connection.

In particular, the changes made to the PLC such as the remote control and implementation of the auto analyser by enzymatic route allow an immediate intervention that optimizes the management of the processings.

In addition, the inclusion of a product dosage module, comprising the electromagnetic litre counter, allows use of the system for the rehydration of commercial yeasts and the preparation of pied de cuve.

The problems due to filling difficulties, which had resulted in both a slowdown of this operation and spillage of the product, have been resolved thanks to a change of the level control systems and to the inclusion of a second sensor positioned under the drainage grid so as to obtain a redundant safety circuit (both level probes must provide loading consent, otherwise the overfill alarm is triggered). The possibility of having a grid having four separate sectors entails a considerable operator advantage for the performance of cleaning operations and processing changes, as well as the possibility of equipping oneself with grids with different-sized holes.

In addition, implementing 5x20 holes has allowed the problem of imperfect elimination of grape seeds to be resolved.

The replacement of the flexible tubings with rigid, stainless steel systems, in addition to the insertion of bypass discharge valves, has eliminated the problem of the stagnation of processing products within the machines and improved sanitising operations.

The same drainage channels have been modified to allow installation and removal through the central door by a single operator, without the need to have two people enter the tank.

Modification of the sight glass through the installation of a truncated cone-shaped connection and the installation of an interior light, allow an optimal visual inspection of the operations and of the characteristics of the treated product.

In reference to the cooling systems, the control system for the inlet and outlet of glycols has been modified by inserting a dual circuit controlled by four valves and no longer two: it has thus been possible to integrate the system with both single-tubing and dual-tubing coolant circuit (warm and cold separated).

Lastly, with regard to the height problems, a new system for locking the tank to the support frame has been devised, eliminating the support legs, replaced by a circular metal sheet that has allowed the height to be reduced by over 13 cm in the 2500 litre version, with the consequent possibility of performing vertical, and not merely horizontal, transport.

In the PFM marc process, the loading operation is preferably performed by means of a tube and a pump, which can be of the peristaltic or volumetric type, until the level indicated by the audible alarm, issued of the probe positioned on the roof of the tank to about 20 cm from the edge, is achieved.

Following the addition of the cryogenic medium, since the volume occupied by the same amount of solid-state water is higher than that initially occupied in the liquid state, a loss of compartmental cell structure due to the so-called "cellular crash" and the consequent outflow of the compounds contained therein is observed, thus facilitating diffusion in the liquid phase that tends to become enriched with cellular metabolites in general and wine in particular.

Modulation of the temperature, the total duration of treatment, the frequency and the duration of agitations, the frequency and the duration of the liquid pumping over operations, the rotation of the propellers in a single direction or in both directions alternatively are all parameters controlled by a processing program suitable for each grape variety. An audible and visual alarm alerts of the termination of the processing and of any anomalies and blocks.

In the vinification lees valorisation process, the sulphur dioxide treatment serves to protect the matrix from any microbial pollution.

For processing of the lees in the machine according to the invention, the scraper, the separating grid and the vertical drainage channels must be removed from inside the machine. Connection of the internal micro oxygenation system within must be checked and installed and the injection probe installed by means of the retractable rod and valve arranged 20 cm from the bottom of the tank. Loading of the lees will be performed with a tube and a pump, with the assistance of the appropriate level probes to achieve complete filling of the machine.

The processing parameters (duration of treatment, frequency and duration of the agitations, direction of rotation of the agitation members, amount of oxygen supplied by means of a micro-oxygenator) must be set as a function of the oenological objectives and of the quality of the lees and in relation to the possible addition of commercial enzymes and/or inactivated yeasts. The working temperature can be set between 17and 22 °C. These additions may, in general, contribute to improving the characteristics of the wine obtained on termination of the processing and to speeding up processing times. An audible and visual alarm alerts of the termination of the processing and of any anomalies and blocks. At the end of the processing circuit, following a suitable decantation period, which can be performed inside the machine according to the invention, the wine will be separated from the sediment by means of a decanter valve present on-board the machine. During decantation in the machine according to the invention, which can last from 1 week up to 3 months depending on cellar requirements, it is possible to check the temperature and provide oxygen in micro-controlled doses so as to promote colour stabilisation reactions and prevent the onset of reduction defects. Lastly, the wine obtained can be used to dilute other wines in percentage as a function of production objectives, possibly after barrel maturation. The operation yield can vary between 10% and 20%.

In addition to conducting post-fermentation cold maceration (PFM) and valorising vinification lees (VL), both object of the present invention, it can also be exploited for the following operations:
commercial yeast rehydration: the macerator is equipped with a litre counter that allows the necessary water for the rehydration and the amount of rehydrated yeasts to be introduced into the tanks to be precisely dosed, furhtemore the predisposition for the insertion of a micro-oxygenator allows the amount of necessary oxygen within the solution containing the yeasts to be diluted. The operator can program the PLC so that the machine automatically corrects the temperature of the solution, if necessary, and set the time necessary for rehydration, after which the machine alerts the operator by means of audible and visual alarms;
preparation of pied de cuve: in addition to the rehydration of active dry yeasts, it is possible to use machine equipment (1) for the preparation of pied de cuve, thanks to the litre counter, the micro-oxygenator, the temperature control, it is in fact possible to use the machine for the continuous multiplication of active yeasts. The machine will alert the operator of when to intervene for the addition of the dry yeasts, water, sugar and/or the must, and when the mass is ready for the inoculum;
   - conducting the pre-fermentation cold and warm maceration: to maximise the extraction of colourant substances and polysaccharides, or for the vinification of grapes attacked by Botrytis Cinerea (warm maceration in this case), the machine (1) can be used for the cold and warm maceration of the grapes in the preceding stages of fermentation. The total insulation and thermal bands over the entire surface allow a rapid raising or lowering of the temperature, the agitator and the pumping over system ensure the homogeneity of the mass, and the processing circuit is fully automatable through programming of the PLC;
micro-oxygenation: the machine (1) is equipped with a micro-oxygenator and oxygen diffuser. The micro-oxygenation process is promoted by easy temperature management and automatable by the PLC inserted into the machine;
tartaric stabilisation: the thermal insulation provided by the insulation and by the thermal liners that cover a large part of the surface allow the machine (1) to also be used as an effective tank for the wine to perform the cold tartaric stabilisation or to bring/maintain a certain temperature when necessary (for conducting malolactic fermentation for example);
storage of the product at a controlled temperature: since all the work members are fully demountable and removable, the machine (1) can also be used as a common storage tank, with the advantage, however, that it can exert an effective temperature control thereof;
correction of the pH using cation-exchange resins: when, due to adverse weather conditions, or due to an imperfect maturation of the grapes, we are faced with a raw material with high pH values, it is possible to use the lower part of the tank, underneath the grid, to insert the cationic exchange resins, loose or in bags, and use the machine (1) as a temperature-controlled recirculation tank for the pH abatement process. pH values will be constantly monitored by the autoanalyser, which, communicating with the PLC, makes automatic process management possible;
chip management;
   - management of the flora of unwanted yeasts.

Such a degree of multifunctionality is not evident in any case in current systems, and guaranteed, on the one hand, by the structure of the internal parts (filtration grid, agitation system, scraper) that have different functions and are completely removable so as to optimise cleaning operations between different operations, on the other hand, by the control systems of different processing parameters. The multifunctional management of system through a dedicated software is thus another characterising element that determines the machine's multifunctionality. Other novel elements are given by the possibility of remotely managing operations and by the possibility of controlling certain parameters of the product in the course of processing by means of an auto-analyser system.

The present invention will be better understood in the light of the following embodiment examples.

### EXPERIMENTAL SECTION

### Examples of industrial application

### Example 1. Post-fermentation cold maceration (PFM)

### Preamble

The maceration tests carried out with the PFM technique have clearly shown that the fermented marc contains a reserve of chemical compounds of varying nature that we could define active, i.e. useful for the quality of the wine, and that these compounds can be only be efficiently yielded to the wine through a treatment designed for this purpose. The PFM perfectly achieves the aim through a rapid destructuring of the solid parts of the grapes, which become more prone to yielding their components. The physical principle on which the PFM treatment is based, makes it suitable for any type of vinification, performed in traditional, biological and biodynamic companies.

### Materials and methods

The macerations with PFM were conducted on Cabernet Franc, Montepulciano and Syrah varieties. At the time of racking, the strained marc was loaded into the machine (1) according to the invention and dry ice (5-8 kg/hl) was added. The processing program was set according to the following parameters: 48 h of processing, temperature +6 °C, 15 minutes of agitations every 6 h. On termination of the processing, the marc was separated, extracted from the machine and pressed, optionally adopting the opposite direction of rotation, from top to down, of the agitators, an agitator pressing can be obtained and the further step of sending the marc to the press can be avoided.

The drained wine was then recombined with the pressed wine. Wines obtained with the PFM technique are called eV. For each variety, wines produced with the traditional maceration technique (T) were inserted in the study as controls. For the Syrah variety, in addition to eV and T wines, press wine deriving from the pressing operation of the fermented marc deriving from the traditional vinification operations was also analysed. For eV, T and press wines, the following chemical parameters were determined: colour intensity (I) and tone (T); total polyphenol index (TPI₂₈₀); total polyphenols (PFT) (g/L of catechin); total flavonoids (TF) (mg/L of catechin), total anthocyanins (TA) (mg/L of malvidin), total non-anthocyanin flavonoids (TFn) (mg/L of catechin); monomeric anthocyanins (Mon %), polymeric anthocyanins (Pol %) and co-pigmented anthocyans (Copig %), cofactors (C); AR% anthocyanins resistant to sulphur dioxide; mucin index (AMI); gelatin index (G); total polysaccharides (TP) (g/L); total proteins (TPR) (mg/L). The sensory profile of the wines was determined according to the Quantitative Descriptive Analysis (QDA), by means of which a qualitative and quantitative description of the perceived sensations, defined as "sensory attributes", is obtained. For the sensory evaluation, a group of 20 judges was trained on the basis of standards that the perceived sensation to be associated with a descriptor.

### Results

The Cabernet Franc and Montepulciano wines processed with the PFM technique (eV) and in the traditional manner (T), were analysed after about 5 months of maturation in wooden barrels. The results obtained **(Table 1)** show that wine obtained with PFM treatment, are characterized by a lesser phenolic content with respect to traditional wines. Even if inferior with respect to traditional wines, the colourant intensity of eV wines remains at high levels and the tonality is very similar. Important differences are noted at the level of the phenolic matrix. The eV wines are characterized by a greater content of polymeric pigments (Pol%) and anthocyanins resistant to sulphur dioxide (AR%), indicating a greater colour stability with respect to the traditional wines. The protein content of the eV wines is lower than that found in the traditional samples. The AMI index is significantly lower in the eV wines with respect to the traditional wines, thus, at this stage of maturation, more astringent and aggressive.

**Table 1. Chemical parameters of the Cabernet Franc and Montepulciano wines processed with the post-fermentation cold maceration technique in the machine according to the invention (eV) and in the traditional manner (T).**

| **Campioni** | **I** | **T** | **TPI₂₈₀** | **PFT** | **TF** | **TA** | **TFn** | **Copig%** | **Mon%** | **Pol%** | **C** | **AR%** | **AMI** | **G** | **TPr** | **TP** |
|---|---|---|---|---|---|---|---|---|---|---|---|---|---|---|---|---|
| **Cabernet Franc T** | 11,8 | 0,66 | 54 | 2,2 | 1620 | 338 | 1128 | 12 | 52 | 36 | 6 | 0 | 27,9 | 17 | 63 | 0,9 |
| **Cabernet Franc eV** | 9,2 | 0,65 | 41 | 1,5 | 1045 | 190 | 769 | 0 | 65 | 38 | 4 | 22 | 6,1 | 15 | 39 | 0,9 |
| **Montepulciano T** | 22,7 | 0,51 | 79 | 3,2 | 2426 | 414 | 1824 | 0 | 79 | 31 | **8** | 0 | 103,6 | **20** | 78 | 0,8 |
| **Montepulciano eV** | 11,7 | 0,57 | 53 | 3,0 | 1902 | 223 | 1577 | 0 | 66 | 36 | 6 | 34 | 47,3 | 23 | 56 | 0,8 |

**Table 2** shows the yield of the extraction operation in terms of colour and of phenolic compounds. The percentage contributions of the two different operations are calculated by placing the sum equal to 100% of the substances extracted from the grapes with the traditional maceration technique and with the PFM technique. The percentage of substances extracted with the PFM technique varies from 36 to 43 in the case of the Cabernet Franc and from 34 to 48 in the case of the Montepulciano. These values indicate that in the PFM technique it is possible to recover large amounts of active compounds still present in the fermented marc.

**Table 2. Extraction yield (%)**

| | **Cabernet Franc** | | **Montepulciano** | |
|---|---|---|---|---|
| | **T** | **eV** | **T** | **eV** |
| **I** | 56,2 | 43,8 | 66,0 | 34,0 |
| **IPT₂₈₀** | 57,4 | 43,6 | 59,8 | 40,2 |
| **PFT** | 59,5 | 40,5 | 51,6 | 48,4 |
| **TF** | 60,8 | 39,2 | 56,1 | 43,9 |
| **TA** | 64,0 | 36,0 | 64,0 | 35,1 |
| **TFn** | 59,5 | 40,5 | 53,6 | 46,4 |

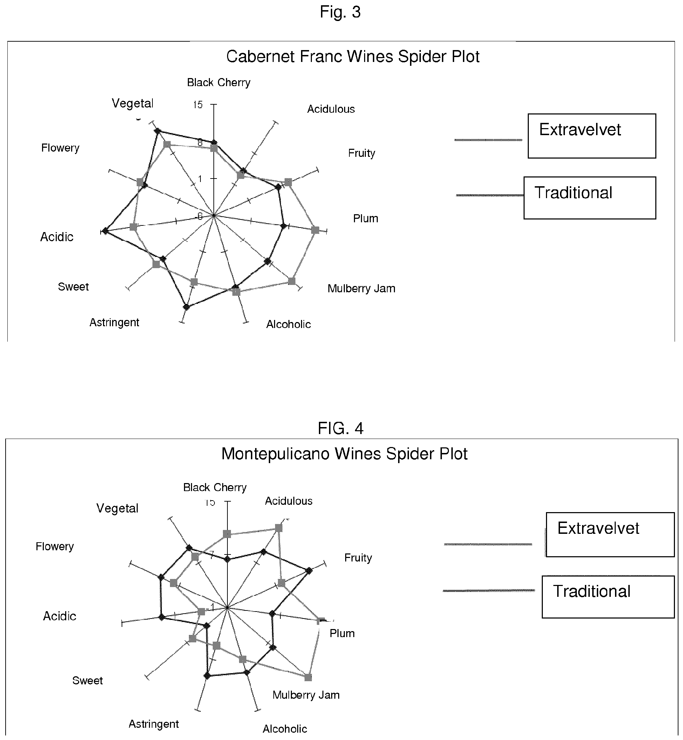

The results of the sensory tests **(****Fig. 3) and (4****)** conducted on Cabernet Franc and Montepulciano varieties show that wines eV differ from traditional wines in both aroma and in taste and tactile characteristics. In particular, the eV wines are less astringent and less acidic, with a greater length and body (softness and viscosity). From the aromatic point of view, they have analogous, but more mature, fruity notes to the respective, traditionally vinified wines, with descriptors attributable to fruit jam, dried and/or cooked fruit (berry, plum, black cherry jam).

As regards the Syrah variety, the wine produced with the PFM technique (eV), in the traditional manner (T) and the press wine were analysed after about 5 months of maturation in wooden barrels. The results shown in **Table 3** confirm the findings for the Cabernet Franc and Montepulciano wines obtained by PFM. The eV wine has a lesser phenolic content and a greater percentage of polymer pigments (Pol%) and anthocyanin resistant to sulphur dioxide (AR%) with respect to traditional wine (T). The protein content of the eV wine is about half of that found in the traditional wine. The AMI index of the Syrah eV wine is about 1/3 with respect to that of the traditional wine. From the results of the analysis, it is also shown that the eV wine has chemical characteristics that are much more similar to those of the traditional wine rather than those of the press wine. The latter is in fact characterized by a decisively lower phenolic content with respect to the other two wines and a by a much lower colourant intensity. The data shown in Table 4 relates to the analysis performed on samples collected during PFM processing (T0, T1 and T2, which respectively correspond to the wines collected before commencing the treatment, after 24 and 48 of treatment) and on a sample collected 14 days after treatment. The initially high polyphenol content decreases with the treatment, the same trend is found for the proteins. Following an initial increase, the mucin index (AMI) is then subject to a considerable reduction.

**Table 3. Chemical parameters of the Syrah wines processed with the post-fermentation cold maceration technique in the machine according to the invention (eV), in the traditional manner (T) and of the press wine.**

| | **I** | **T** | **TPI₂₈₀** | **PFT** | **TF** | **TA** | **TFn** | **Copig%** | **Mon%** | **Pol%** | **C** | **AMI** | **AR%** | **TPr** |
|---|---|---|---|---|---|---|---|---|---|---|---|---|---|---|
| **Syrah eV** | 11,2 | 0,55 | 52 | 2,1 | 1891 | 291 | 1468 | 21 | 32 | 47 | 6 | 22 | 16 | 24 |
| **Syrah T** | 15,2 | 0,54 | 64 | 2,7 | 2244 | 392 | 1674 | 31 | 29 | 40 | 9 | 61 | 15 | 43 |
| **Syrah Torchiato** | 5,3 | 0,68 | 32 | 1,4 | 791 | 142 | 584 | 21 | 33 | 46 | 4 | 10 | 7 | 30 |

**Table 4. Chemical parameters of the Syrah wine during post-fermentation cold maceration treatment in the machine according to the invention (eV) and 14 days after treatment.**

| | **I** | **T** | **PFT** | **TF** | **TA** | **TFn** | **TPr** | **AMI** |
|---|---|---|---|---|---|---|---|---|
| **T0** | 14,8 | 0,45 | 3,6 | 1924 | 486 | 1217 | 93 | 85 |
| **T1 (24 h)** | 12,9 | 0,47 | 2,9 | 1256 | 281 | 846 | 80 | 119 |
| **T2 (48 h)** | 11,0 | 0,50 | 3,1 | 1002 | 198 | 714 | 63 | 72 |
| **T3 (14 giorni)** | 11,1 | 0,48 | 3,4 | 2371 | 491 | 1656 | 56 | 46 |

### Example 2. Valorisation of vinification lees (VL)

### Preamble

Lees are a vinification by-product characterized by the ability to yield active compounds such as polyphenols, aromas and polysaccharides. The role of lees in the traditional wine maturation phase is known. There is no doubt on the fact that contact of the wine and the lees contributes to the quality of the wine, however, the key compounds and the interactions responsible for improving the wine have not yet been fully clarified. In any case, with the traditional sur lie maturation techniques, the positive effects on the composition of the wine are only achieved after a long period of contact and periodic resuspension operations.

### Materials and methods

The tests were performed using the lees of 2012 (Chianti area) and 2013 (Montalcino, Siena) Sangiovese grape vintages. At the time of harvest, the grapes were in excellent health condition. At the end of the alcoholic and malolactic fermentations, the wines were stored in a tank for sedimentation according to the internal processing protocols of each company, and then transferred. SO₂(70 mg L⁻¹) was added to the lees collected in a 150 hl tank. After 30 min open-air pumping over, the lees were processed according to the VL technique. For tests A and B (2012 vintage), the lees (1.2 and 1.1 kg L⁻¹ respectively) were maintained at a temperature of 22 °C and stirred every two days for 30 min. The samples were collected every 15 days until termination of the treatment (30 and 60 days for tests A and B respectively). For test C (2013 vintage), the lees (1.4 g L⁻¹) were maintained at a temperature of 22 °C, with micro-oxygenation (3 mg /L/month of O₂), and stirred for 10 min every 8 h for seven days. The lees were then maintained stationary at 20 °C with micro-oxygenation (3 mg /L/month of O₂). The samples were collected at 0, 3, 7 and after 30 days of the treatment. Control samples CA, CB and CC were collected from the tanks in which the lees were maintained stationary at 20 °C. The following chemical parameters were determined for the wines obtained from the lees: colour intensity (I) and tone (T); total polyphenol index (TPI₂₈₀);total flavonoids (TF) (mg/L of catechin), total anthocyanins (TA) (mg/L of malvidin), total non-anthocyanin flavonoids (TFn) (mg/L of catechin); monomeric anthocyanins (Mon %), polymeric anthocyanins (Pol %) and co-pigmented anthocyans (Copig %), cofactors (C); mucin index (AMI); gelatin index (G); total polysaccharides (TP) (g/L); total proteins (TPR) (mg/L) and α-amino nitrogen (N) (mg/L).

### Results

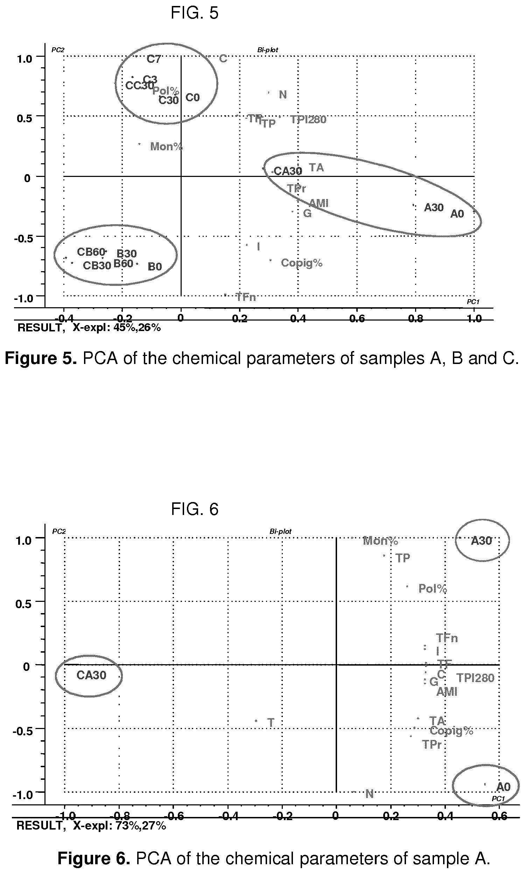

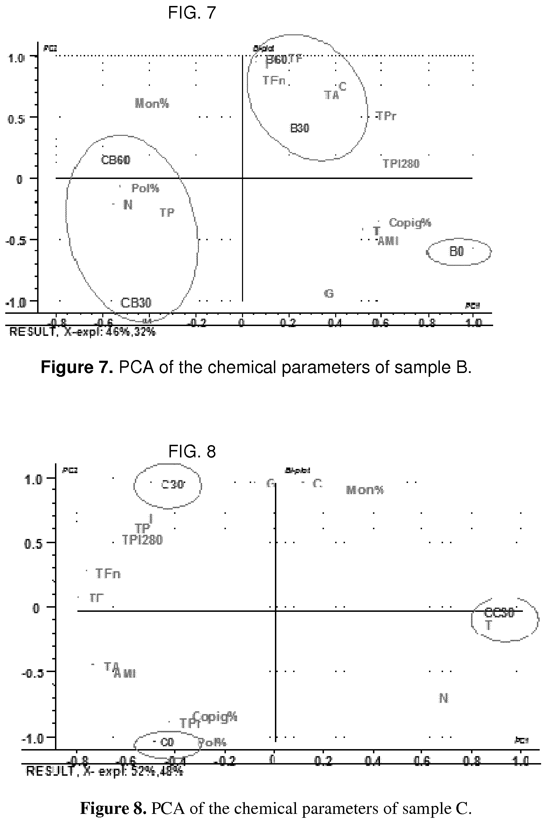

The principal component analysis (PCA) of the chemical parameters has shown that the samples can be grouped according to the vintage, the age of the lees and the type of treatment **(****Figure 5****).** Most of the variance (71%) is explained by the first two principal components. The principal component analysis (PCA) of the chemical parameters of the samples A, B, and C was performed separately **(****Figures 6****,** **7, 8****).** In all tests, the control samples CA30, CB30, CB60 and DC30 are located on the opposite side of the diagram with respect to the samples of treated lees. The wine obtained from the treated lees, A30 and C30, differed from the control samples (CA30 and CC30) in the colour, the phenolic indices and nitrogenous compounds. After 30 days, the total polysaccharide content was greater in the treated lees (A30 and C30) with respect to the sample collected at the start of treatment (A0 and C0) and polyphenol reactivity with the proteins in terms of AMI, was lower. The older lees used to perform test B showed a different trend **(****Figure 7****).** The total polysaccharide content and the AMI index were lower in treated samples B30 and B60 with respect to the control sample. The lower polysaccharide content was probably due to the formation of unstable complexes. The decrease in the AMI index detected in all samples treated indicates that the polyphenols become progressively less reactive to proteins during treatment. These results suggest that the treatment of lees can contribute to decreasing the astringency perceived on consuming the wine, in a very short period of time. The colour of the wines, in terms of intensity and tone, and the total polyphenol content remained constant during treatment. No olfactory deviation was observed in the course of treatment.

In conclusion, the results show that the alternative management proposed for the valorisation of the vinification lees allows wines with suitable chemical characteristics to be obtained in short periods of time. The use of this technique can constitute a new instrument for increasing the value of the lees in the oenological industry.

### Bibliography

1. F., Catolfi, degree thesis "La macerazione post-fermentativa a freddo" 2009, Examiner: Ms Monica Picchi, Co-Examiner: Claudio Gori, Oenologist,
2. A., Toledo, degree thesis "La lavorazione delle fecce di Sangiovese mediante l'utilizzo di un nuovo maceratore: il prototipo extraVelvet" 2012, Examiner: Ms Giovanna Fia, Co-Examiners: Ms Monica Picchi, Claudio Gori, Oenologist.
3. Fia, G., & Gori, C. (2014) Alternative management of lees in the vinification of Sangiovese grapes. Proceedings of the Third Edition of the International Conference Series on Wine Active Compounds. Edited by Prof. RégisGougèon, Université de Bourgogne, March 26-28, 2014.

## Claims

1. A machine (1) for the preparation of a wine product, comprising a container (2) for containing an at least partly fluid oenological matrix, said container (2) having a prevalent development direction (A); mixing means (3) placed inside the container (2) and configured for mixing said oenological matrix, said mixing means (3) comprising at least a first (5) and a second agitator (6) configured for moving said oenological matrix along said prevalent development direction (A); filtering means (8) placed inside the container (2) and configured for filtering said oenological matrix; means for adjusting the temperature (15) inside said container comprising a plurality of panels (16) arranged peripherally on said container (2) and configured for allowing the circulation therein of a heat exchange fluid; **characterized in that** said panels (16) totally cover at least 75% of the surface of said container (2).

2. A machine (1) according to the preceding claim, **characterized in that** it comprises control means of the PLC type, associated with said adjusting means and/or said mixing means (7) and/or said filtering means (8) and/or said temperature adjustment means (15), said control means comprising a wireless receiver module and an enzymatic analyzer module.

3. A machine (1) according to any one of the preceding claims, **characterized in that** it comprises a loading/unloading conduit (17/17a) placed in fluid communication with said container (2), said control means comprising a product dosing module and an electromagnetic flow meter associated with said loading/unloading conduit (17/17a).

4. A machine (1) according to any one of the preceding claims, **characterized in that** said control means comprise a first and a second level sensor.

5. A machine (1) according to any one of the preceding claims, **characterized in that** it comprises a valve (32) arranged for insertion into container (2) of a porous diffuser, connected via flexible tubing to a micro-oxygenation system.

6. A machine (1) according to any one of the preceding claims, **characterized in that** said temperature adjustment means comprise a first and a second circuit for the circulation of said heat exchange fluid, said circuit comprising a pair of inlets (30) and a pair of outlets (30) for said heat exchange fluid.

7. A machine (1) according to any one of the preceding claims, **characterized in that** it comprises support means (24) comprising a plurality of legs (25) and a peripheral metal sheet placed externally with respect to said legs (26).

8. A machine (1) according to any one of the preceding claims, **characterized in that** the filtering means (8) comprise a grid (10) placed in a lower zone of the container (2), a scraper (11) placed in contact with said grid (10) and configured for rotating with respect to said prevalent development direction (A) of said container (2), said scraper being configured for removing a solid residue from said grid (10) in both directions of rotation.

9. A machine (1) according to the preceding claim, **characterized in that** said scraper comprises a support bar, a pair of blades (14) arranged symmetrically with respect to said support bar, each active on said grid (10) in a respective direction of rotation of said scraper (11).

10. A machine (1) according to claim 8 or 9, **characterized in that** it comprises a further first agitator (12) opposite to said scraper (11) with respect to said prevalent development direction (A).

11. A machine (1) according to any one of claims 8 to 10, **characterized in that** said grid (10) is arranged in a seat (13) inside said container (2), said grid (10) comprising at least three and preferably four portions (10a) reversibly removable from said seat (13).

12. A machine (1) according to any one of the preceding claims, **characterized in that** at least one of said level sensors is positioned below said grid (10).

13. Use of the machine according to any one of claims 1-12 in the oenological production chain.

14. A vinification process through post-fermentation cold maceration (PFM) of marc, said process comprising:
loading a drained marc extracted from the fermentation tank in the machine (1) according to any one of claims 1-12;
adding drain wine to the marc in a marc:drain wine ratio of about 3:1, to obtain a mass in which the marc is in a floating state;
adding a cryogenic means to the mass under stirring 1-40 rpm as a function of the quality of the marc, said cryogenic means selected from dry ice, liquid CO₂ and liquid nitrogen, in an amount ranging between 5 and 10 kg/hL, for causing within the mass an abrupt decrease in temperature sufficient to break up the cells of the skins with consequent release of different metabolites;
depending on the variety of grape from which the marc is derived, the state of ripeness of the grapes at harvest time and the maceration technique used, the temperature will be kept between +2 °C and +8 °C, the total duration of the treatment may range from 24 to 72 hours, with stirring of 10-20 minutes every 4-8 hours, the liquid pumping over operations will be carried out with a frequency of 2-4 times for a duration of 10-15 minutes, the rotation of the propellers in a single direction or in both directions alternately;
at the end of the treatment, the PFM wine is obtained by draining, thanks to the filtering grid which retains the solids; the treated marc is then extracted from the machine thanks to the double scraper, and pressed, or sent directly to the distillery.

15. A process of valorization of vinification lees, said process comprising:
collecting vinification lees in a tank and adding sulfur dioxide in an amount equal to about 60-70mg/mL of lees;
homogenizing the lees through a mixing operation by pumping over of 20-30 minutes;
loading the lees in the machine (1) according to any one of claims 1-12;
processing at 17-22 ° C for a time between 3 and 7 days, and mixing every 6-10 hours for 5-15 minutes, with clockwise or counter clockwise direction of rotation of the mixing members, providing an amount of oxygen supplied through a micro-oxygenator between 2 and 4 mg/L/month and optionally adding commercial enzymes and/or inactivated yeast;
decanting for a time of between 1 week and 3 months and optionally adding oxygen in micro-doses of 2-4 mg/L/month;
separating the wine through the decanter valve (27).

## Patentansprüche

1. Maschine (1) für die Zubereitung eines Weinprodukts, wobei die Maschine einen Behälter (2) zum Aufnehmen einer wenigstens teilweise fluiden önologischen Matrix, wobei der genannte Behälter (2) eine vorherrschende Entwicklungsrichtung (A) aufweist; Mischmittel (3), die in dem Behälter (2) angeordnet sind und dafür konfiguriert sind, die genannte önologische Matrix zu mischen, wobei die genannten Mischmittel (3) wenigstens einen ersten Rührer (5) und einen zweiten Rührer (6) umfassen, die dafür konfiguriert sind, die genannte önologische Matrix entlang der genannten vorherrschenden Entwicklungsrichtung (A) zu bewegen; Filtermittel (8), die in dem Behälter (2) angeordnet sind und dafür konfiguriert sind, die genannte önologische Matrix zu filtern; Mittel zum Einstellen der Temperatur (15) in dem genannten Behälter, die mehrere Tafeln (16) umfassen, die an dem genannten Behälter (2) peripher angeordnet sind und dafür konfiguriert sind, das Umwälzen eines Wärmeaustauschfluids darin zu ermöglichen, umfasst, **dadurch gekennzeichnet, dass** die genannten Tafeln (16) insgesamt wenigstens 75 % der Oberfläche des genannten Behälters (2) bedecken.

2. Maschine (1) gemäß dem vorhergehenden Anspruch, **dadurch gekennzeichnet, dass** sie Steuermittel des PLC-Typs umfasst, die den genannten Einstellmitteln und/oder den genannten Mischmitteln (7) und/oder den genannten Filtermitteln (8) und/oder den genannten Temperatureinstellmitteln (15) zugeordnet sind, wobei die genannten Steuermittel ein drahtloses Empfängermodul und ein Enzymanalysatormodul umfassen.

3. Maschine (1) gemäß einem der vorhergehenden Ansprüche, **dadurch gekennzeichnet, dass** sie eine in Fluidverbindung mit dem genannten Behälter (2) angeordnete Beschickungs-/Entleerungsleitung (17/17a) umfasst, wobei die genannten Steuermittel ein Produktdosiermodul und einen der genannten Beschickungs-/Entleerungsleitung (17/17a) zugeordneten elektromagnetischen Durchflussmengenmesser umfassen.

4. Maschine (1) gemäß einem der vorhergehenden Ansprüche, **dadurch gekennzeichnet, dass** die genannten Steuermittel einen ersten und einen zweiten Pegelsensor umfassen.

5. Maschine (1) gemäß einem der vorhergehenden Ansprüche, **dadurch gekennzeichnet, dass** sie ein Ventil (32) umfasst, das für die Einführung eines porösen Diffusors, der über eine biegsame Rohrleitung mit einem Mikro-Sauerstoffanreicherungssystem verbunden ist, in den Behälter (2) ausgelegt ist.

6. Maschine (1) gemäß einem der vorhergehenden Ansprüche, **dadurch gekennzeichnet, dass** die genannten Temperatureinstellmittel eine erste und eine zweite Leitung zum Umwälzen des genannten Wärmeaustauschfluids umfassen, wobei die genannte Leitung ein Paar Einlässe (30) und ein Paar Auslässe (30) für das genannte Wärmeaustauschfluid umfasst.

7. Maschine (1) gemäß einem der vorhergehenden Ansprüche, **dadurch gekennzeichnet, dass** sie Stützmittel (24), die mehrere Beine (25) umfassen, und ein peripheres Blech, das in Bezug auf die genannten Beine (26) außerhalb angeordnet ist, umfasst.

8. Maschine (1) gemäß einem der vorhergehenden Ansprüche, **dadurch gekennzeichnet, dass** die Filtermittel (8) ein Gitter (10), das in einer unteren Zone des Behälters (2) angeordnet ist, einen Abstreifer (11), der in Kontakt mit dem genannten Gitter (10) angeordnet ist und dafür konfiguriert ist, sich in Bezug auf die genannte vorherrschende Entwicklungsrichtung (A) des genannten Behälters (2) zu drehen, umfassen, wobei der genannte Abstreifer dafür konfiguriert ist, in beiden Drehrichtungen einen Feststoffrest von dem genannten Gitter (10) zu entfernen.

9. Maschine (1) gemäß dem vorhergehenden Anspruch, **dadurch gekennzeichnet, dass** der genannte Abstreifer einen Stützbalken, eine Paar Flügel (14), die in Bezug auf den genannten Stützbalken symmetrisch angeordnet sind, umfasst, wobei jeder in einer jeweiligen Drehrichtung des genannten Abstreifers (11) an dem genannten Gitter (10) aktiv ist.

10. Maschine (1) gemäß Anspruch 8 oder 9, **dadurch gekennzeichnet, dass** sie einen weiteren ersten Rührer (12), der dem genannten Abstreifer (11) in Bezug auf die genannte vorherrschende Entwicklungsrichtung (A) gegenüberliegt, umfasst.

11. Maschine (1) gemäß einem der Ansprüche 8 bis 10, **dadurch gekennzeichnet, dass** das genannte Gitter (10) in dem genannten Behälter (2) in einem Sitz (13) angeordnet ist, wobei das genannte Gitter (10) wenigstens drei und vorzugsweise vier Abschnitte (10a), die von dem genannten Sitz (13) reversibel entnehmbar sind, umfasst.

12. Maschine (1) gemäß einem der vorhergehenden Ansprüche, **dadurch gekennzeichnet, dass** wenigstens einer der genannten Pegelsensoren unter dem genannten Gitter (10) positioniert ist.

13. Verwendung der Maschine gemäß einem der Ansprüche 1-12 in der önologischen Produktionskette.

14. Weinbereitungsverfahren durch kalte Mazeration nach der Fermentierung (PFM) von Trester, wobei das genannte Verfahren umfasst:
Beschicken eines aus dem Fermentierungstank in der Maschine (1) gemäß einem der Ansprüche 1-12 extrahierten getrockneten Tresters;
Zusetzen von Trockenwein zu dem Trester in einem Verhältnis von Trester:Trockenwein von etwa 3:1, um eine Masse zu erhalten, in der der Trester in einem schwebenden Zustand sind;
Zusetzen eines Tieftemperaturmittels zu der Masse unter Rühren mit 1-40 U/min in Abhängigkeit von der Qualität des Tresters, wobei das genannte Tieftemperaturmittel aus Trockeneis, flüssigem CO₂ und flüssigem Stickstoff in einer Menge in einem Bereich zwischen 5 und 10 kg/hl ausgewählt wird, um in der Masse eine plötzliche Temperaturabsenkung zu veranlassen, die ausreicht, die Zellen der Schalen mit daraus folgender Freisetzung verschiedener Stoffwechselprodukte aufzubrechen;
wobei die Temperatur in Abhängigkeit von der Traubensorte, von der der Trester abgeleitet ist, dem Reifezustand der Trauben zur Erntezeit und der verwendeten Mazerierungstechnik zwischen +2 °C und +8 °C gehalten wird, wobei die Gesamtdauer der Behandlung in dem Bereich von 24 bis 72 Stunden liegen kann, wobei alle 4-8 Stunden 10-20 Minuten gerührt wird, wobei mit einer Häufigkeit von 2-4-mal für eine Dauer von 10-15 Minuten Flüssigkeitsumpumpoperationen ausgeführt werden, wobei die Drehung der Laufräder in einer einzelnen Richtung oder abwechselnd in beiden Richtungen erfolgt;
wobei am Ende der Behandlung durch Ablaufen dank des Filtergitters, das die Feststoffe zurückhält, der PFM-Wein erhalten wird; woraufhin der behandelte Trester dank dem Doppelabstreifer aus der Maschine extrahiert wird und gepresst wird oder direkt an die Brennerei gesendet wird.

15. Verfahren zur Aufwertung von Weinbereitungstrub, wobei das genannte Verfahren umfasst:
Sammeln von Weinbereitungstrub in einem Tank und Zusetzen von Schwefeldioxid in einer Menge gleich etwa 60-70 mg/ml Trub;
Homogenisieren des Trubs durch eine Mischoperation durch Pumpen über 20-30 Minuten;
Beschicken des Trubs in die Maschine (1) gemäß einem der Ansprüche 1-12;
Verarbeiten für eine Zeitdauer zwischen 3 und 7 Tagen bei 17-22 °C und alle 6-10 Stunden Mischen für 5-15 Minuten mit Drehrichtung der Mischelemente in Uhrzeigerrichtung oder entgegen der Uhrzeigerrichtung, Bereitstellen einer Sauerstoffmenge, die durch einen Mikrooxygenator zwischen 2 und 4 mg/l/Monat zugegeben wird, und optionales Zusetzen kommerzieller Enzyme und/oder deaktivierter Hefe;
Dekantieren für eine Zeitdauer zwischen 1 Woche und 3 Monaten und optional Zusetzen von Sauerstoff in Mikrodosen von 2-4 mg/l/Monat;
Abtrennen des Weins durch das Dekantierventil (27).

## Revendications

1. Machine (1) de préparation d'un produit vinicole, comprenant une cuve (2) pour contenir une matrice oenologique au moins partiellement fluide, ladite cuve (2) ayant une direction préférentielle de déploiement (A) ; des moyens de mélange (3) placés à l'intérieur de la cuve (2) et configurés pour mélanger ladite matrice oenologique, lesdits moyens de mélange (3) comprenant au moins un premier (5) et un second agitateur (6) configurés pour déplacer ladite matrice oenologique le long de ladite direction préférentielle de déploiement (A) ; des moyens de filtration (8) placés à l'intérieur de la cuve (2) et configurés pour filtrer ladite matrice oenologique ; des moyens pour le réglage de la température (15) à l'intérieur de ladite cuve comprenant une pluralité de panneaux (16) agencée sur de manière périphérique sur ladite cuve (2) et configurée pour permettre la circulation à l'intérieur de celle-ci d'un fluide d'échange thermique ; **caractérisée en ce que** lesdits panneaux (16) couvrent totalement au moins 75 % de la surface de ladite cuve (2).

2. Machine (1) selon la revendication précédente, **caractérisée en ce qu'**elle comprend des moyens de commande du type automate programmable (PLC), associés auxdits moyens de réglage et/ou auxdits moyens de mélange (7) et/ou auxdits moyens de filtration (8) et/ou auxdits moyens de réglage de température (15), lesdits moyens de commande comprenant un module de réception sans fil et un module d'analyse enzymatique.

3. Machine (1) selon l'une quelconque des revendications précédentes, **caractérisée en ce qu'**elle comprend un conduit de charge/décharge (17/17a) placé en communication fluidique avec ladite cuve (2), lesdits moyens de commande comprenant un module de dosage de produit et un débitmètre électromagnétique associé audit conduit de charge/décharge (17/17a).

4. Machine (1) selon l'une quelconque des revendications précédentes, **caractérisée en ce que** lesdits moyens de commande comprennent un premier et un second capteur de niveau.

5. Machine (1) selon l'une quelconque des revendications précédentes, **caractérisée en ce qu'**elle comprend une soupape (32) conçue pour être insérée dans la cuve (2) d'un diffuseur poreux, connecté par l'intermédiaire d'un tube souple à un système de micro-oxygénation.

6. Machine (1) selon l'une quelconque des revendications précédentes, **caractérisée en ce que** lesdits moyens de réglage de température comprennent un premier et un second circuit pour la circulation dudit fluide d'échange thermique, ledit circuit comprenant une paire d'orifices d'entrée (30) et une paire d'orifices de sortie (30) pour ledit fluide d'échange thermique.

7. Machine (1) selon l'une quelconque des revendications précédentes, **caractérisée en ce qu'**elle comprend des moyens de support (24) comprenant une pluralité de pieds (25) et une feuille métallique périphérique placée à l'extérieur par rapport auxdits pieds (26).

8. Machine (1) selon l'une quelconque des revendications précédentes, **caractérisée en ce que** les moyens de filtration (8) comprennent une grille (10) placée dans une zone inférieure de la cuve (2), un racloir (11) placé en contact avec ladite grille (10) et configuré pour tourner par rapport à ladite direction préférentielle de déploiement (A) de ladite cuve (2), ledit racloir étant configuré pour éliminer un résidu solide à partir de ladite grille (10) dans les deux sens de rotation.

9. Machine (1) selon la revendication précédente, **caractérisée en ce que** ledit racloir comprend une barre de support, une paire de lames (14) disposées symétriquement par rapport à ladite barre de support, chacune étant active sur ladite grille (10) dans un sens de rotation respectif dudit racloir (11).

10. Machine (1) selon la revendication 8 ou 9, **caractérisée en ce qu'**elle comprend un premier agitateur supplémentaire (12) opposé audit racloir (11) par rapport à ladite direction préférentielle de déploiement (A).

11. Machine (1) selon l'une quelconque des revendications 8 à 10, **caractérisée en ce que** ladite grille (10) est disposée dans un siège (13) à l'intérieur de ladite cuve (2), ladite grille (10) comprenant au moins trois et de préférence quatre parties (10a) détachables de manière réversible dudit siège (13).

12. Machine (1) selon l'une quelconque des revendications précédentes, **caractérisée en ce qu'**au moins un desdits capteurs de niveau est positionné sous ladite grille (10).

13. Utilisation de la machine selon l'une quelconque des revendications 1 à 12 dans une chaîne de production oenologique.

14. Processus de vinification par macération post-fermentaire à froid (MPF) de marc, ledit processus comprenant :
la charge d'un marc égoutté extrait à partir du réservoir de fermentation dans la machine (1) selon l'une quelconque des revendications 1 à 12 ;
l'ajout de vin d'égouttage au marc selon un rapport marc:vin d'égouttage d'environ 3:1, pour obtenir une masse dans laquelle le marc est dans un état de flottement ;
l'ajout d'un moyen croyogénique à la masse sous agitation de 1 à 40 tr/min en fonction de la qualité du marc, ledit moyen cryogénique étant choisi parmi de la glace sèche, du CO₂ liquide et de l'azote liquide, en une quantité s'échelonnant entre 5 et 10 kg/hl, pour provoquer à l'intérieur de la masse une baisse brutale de la température suffisante pour briser les cellules des peaux entraînant la libération de différents métabolites ;
en fonction de la variété du raisin à partir de laquelle le marc est issu, l'état de maturité des raisins au moment de la récolte et la technique de macération utilisée, la température sera maintenue entre +2 °C et +8 °C, la durée totale du traitement peut varier en s'échelonnant de 24 à 72 heures, sous agitation de 10 à 20 minutes toutes les 4 à 8 heures, le pompage de liquide au cours des opérations sera mené à une fréquence de 2 à 4 fois pour une durée de 10 à 15 minutes, la rotation des hélices dans un seul sens ou dans les deux sens par alternance ;
à la fin du traitement, le vin MPF est obtenu par égouttage, grâce à la grille filtrante qui retient les solides ; le marc traité est ensuite extrait de la machine grâce au racloir double, et pressé, ou directement envoyé en distillerie.

15. Processus de valorisation de la lie de vinification, ledit processus comprenant :
le recueil de lie de vinification dans un réservoir et l'ajout de dioxyde de soufre en une quantité égale à environ 60 à 70 mg/ml de lie ;
l'homogénéisation de la lie par une opération de mélange par pompage sur plus de 20 à 30 minutes ;
la charge de la lie dans la machine (1) selon l'une quelconque des revendications 1 à 12 ;
le traitement de 17 à 22 °C pendant une durée comprise entre 3 et 7 jours, et le mélange toutes les 6 à 10 heures pendant 5 à 15 minutes, dans un sens de rotation inverse ou dans le sens des aiguilles d'une montre des éléments de mélange, fournissant une quantité d'oxygène alimentée par un micro-oxygénateur entre 2 et 4 mg/l/mois et éventuellement l'ajout d'enzymes commerciales et/ou de levure inactivée ;
la décantation pendant une durée comprise entre 1 semaine et 3 mois et éventuellement l'ajout d'oxygène en micro-doses de 2 à 4 mg/l/mois ;
la séparation du vin à travers une soupape de décantation (27).
